(19) Europäisches Patentamt

European Patent Office

Office européen des brevets

(11) **EP 0 654 839 B1**

(12) **EUROPEAN PATENT SPECIFICATION**

(45) Date of publication and mention
of the grant of the patent:
**11.03.1998  Bulletin 1998/11**

(51) Int Cl.⁶: **H01M 8/24**, H01M 8/12

(21) Application number: **94118061.4**

(22) Date of filing: **15.11.1994**

(54) **Solid oxide electrolyte fuel cell**

Festoxidelektrytbrennstoffzelle

Pile à combustible à électrolyte solide d'oxydes

(84) Designated Contracting States:
**DE NL**

(30) Priority: **19.11.1993  JP 290266/93**

(43) Date of publication of application:
**24.05.1995  Bulletin 1995/21**

(73) Proprietor: **MITSUBISHI JUKOGYO KABUSHIKI KAISHA**
**Tokyo (JP)**

(72) Inventors:
 • **Satake, Tokuki,**
   **c/o Kobe Shipyard & Mach. Works**
   **Hyogo-ku, Kobe-shi, Hyogo-ken (JP)**
 • **Miyamoto, Hitoshi,**
   **c/o Takasago Res. & Dev. Center**
   **Arai-cho, Takasago-shi, Hyogo-ken (JP)**
 • **Watanabe, Kiyoshi,**
   **c/o Kobe Shipyard & Mach. Works**
   **Hyogo-ku, Kobe-shi, Hyogo-ken (JP)**
 • **Nanjo, Fusayuki,**
   **c/o Kobe Shipyard & Mach. Works**
   **Hyogo-ku, Kobe-shi, Hyogo-ken (JP)**
 • **Takenobu, Koichi,**
   **c/o Kobe Shipyard & Mach. Works**
   **Hyogo-ku, Kobe-shi, Hyogo-ken (JP)**

(74) Representative: **Henkel, Feiler, Hänzel & Partner**
   **Möhlstrasse 37**
   **81675 München (DE)**

(56) References cited:
   **JP-U- 4 008 259**

 • **PATENT ABSTRACTS OF JAPAN, vol. 15, no. 40 (E-102), 30 January 1991**
 • **PATENT ABSTRACTS OF JAPAN, vol. 16, no. 255 (E-1214), 10 June 1992**
 • **DATABASE WPI, Section Ch, week 9436, Derwent Publications Ltd., London (GB); Class L03, AN 94-288503**

**Description**

BACKGROUND OF THE INVENTION

Technical Field

The present invention relates to a SOFC (solid oxide electrolyte fuel cell) and, more specifically, to a SOFC as defined in the preamble portion of the claim which can be used as a cell for water electrolysis, $CO_2$ electrolysis and other electrolyses, as well as for power generation.

Background Technology

The present inventors have proposed a structure in which an oxygen electrode layer and a fuel electrode layer are jointed to the respective faces of a solid oxide electrolyte layer to constitute a 3-layered power generation layer and the power generation layer is formed with a number of dimples on both sides in Japanese Laid-open Utility Model Application No. Hei. 4-8259 and Japanese Laid-open Patent Application No. Hei. 6-215778 both entitled "Solid Oxide Electrolyte Fuel Cell." The former simply proposes provision of the dimples, and the latter is directed to optimization of electrical connection between the dimples and interconnectors.

Another prior art solid electrolyte fuel cell is described in JP-A 22 76 166. In this fuel cell the projections are formed only in a solid electrolyte plate and the current collectors are arranged as plates on the peaks on both sides of the solid electrolyte plate. No mention is made as to the specific structure and arrangement of the projections with respect to providing optimum values of the projection diameter, height and pitch under consideration of the flow of oxygen and fuel gas in accordance with the pressure loss.

Object of the invention

An object of the present invention is to provide a solid oxide electrolyte fuel cell in which the power output performance is improved.

Another aspect of the invention is to enable selection of a dimple shape in accordance with applications such as a large-capacity application and a closed-space, small-capacity application.

To improve the power output performance in terms of shape, the main point is how to increase the reaction area for a certain fixed capacity. Further, a consideration needs to be given to a gas flow.

It is desired that dents, in other words, protrusions that are arranged on the power generation layer constituted of the three layers of the fuel electrode, solid oxide electrolyte and oxygen electrode should be circular for the gas flow, and rectangular for the reaction area.

However, since a plurality of power generation layers are deposited and a gas inlet and outlet are arranged to face each other, a priority is given to the consideration of the gas flow in view of a pressure loss. Therefore, the protrusions, i.e., the outer surfaces of the dimples are required to have a shape similar to a cylinder. To increase the reaction area in the fixed capacity while satisfying this requirement, the height of the protrusions is also an important factor.

SUMMARY OF THE INVENTION

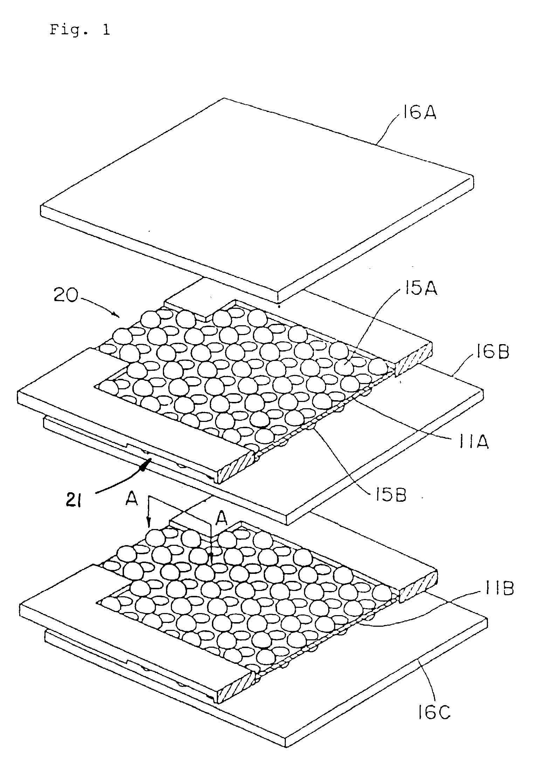

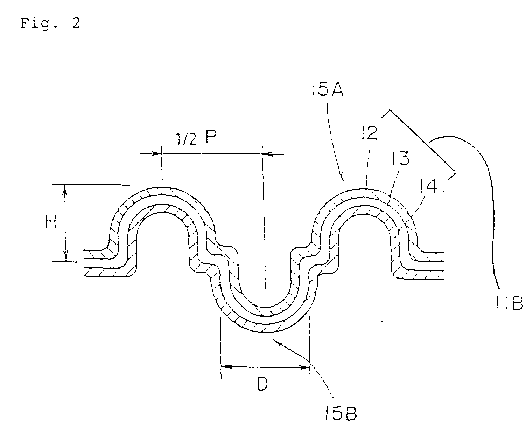

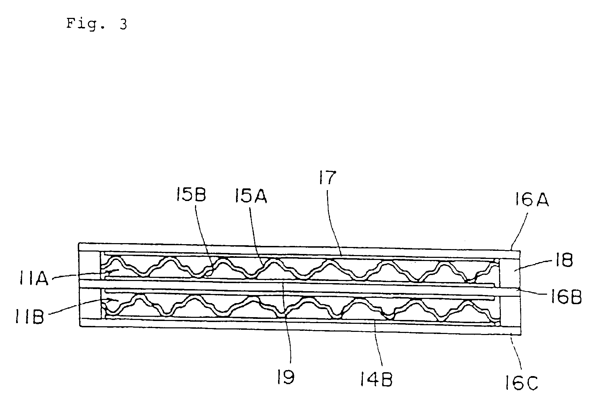

The present invention will be summarized below. A SOFC having a dimpled structure according to the present invention is shown in Figs. 1 to 3. Fig. 1 is an exploded perspective view, Fig. 2 is an enlarged sectional view taken along line A-A in Fig. 1, and Fig. 3 is a sectional view in an assembled state.

In these figures, symbols 11A and 11B denote power generation layers; 12, a fuel electrode; 13, a solid oxide electrolyte; 14, an oxygen electrode; 15A, dimple protrusions on the hydrogen (the fuel) side; 15B, dimple protrusions on the oxygen side; and 16A to 16C, interconnectors. Each of the power generation layers 11A and 11B consists of the fuel electrode 12, solid oxide electrolyte 13 and oxygen electrode 14. The top interconnector 16A is electrically connected to the dimple protrusions (hydrogen side) 15A of the power generation layer 11A with a conductive adhesive 17, and the central interconnector 16B is electrically connected to the dimple protrusions (oxygen side) 15B of the power generation layer 11A with a conductive adhesive 19. Whether to apply the conductive adhesive 17 over the entire surface except for sealing portions 18 or at regions of a certain area that correspond to the respective protrusions 15A is determined in designing depending on the performance of the cell.

Where the conductive adhesives 17 and 19 are applied over the entire surface, the material cost naturally is higher than the case of applying it partially while almost all of transverse electrical flows are absorbed and electrical resistance is lowered.

Conversely, where the conductive adhesives 17 and 19 are applied partially, the material cost is lower while electrical flows are concentrated on the respective regions and the resistance is higher as much.

Therefore, the coating area of the conductive adhesives 17 and 19 is determined based on an economical calculation of total factors such as a current price of the conductive adhesives 17 and 19.

It is desirable that the conductive adhesive 17 and the fuel electrode 12 be made of the same material, and that the conductive adhesive 19 and the oxygen electrode 14 be made of the same material. If an economical evaluation permits it, each of the conductive adhesives 17 and 19 may be made of a material, such as platinum, that is different from the electrode material. The respective members thus formed are assembled as shown in Fig. 3. The output power can further be increased by arranging the assemblies of Fig. 3 vertically or horizontally.

After entering through a fuel inlet 20, a fuel such as $H_2$ is sufficiently diffused by the protrusions 15A while flowing between the interconnector 16A and the dimple outer surfaces. Similarly, after entering through an oxygen (air) inlet 21, oxygen (air) is di'ffused by the dimple protrusions 15B, ionized in the oxygen electrode 14, and passed through the solid oxide electrolyte 13. In the fuel electrode 12, the fuel reacts with the oxygen ions to produce electric energy. Non-reacted fuel and oxygen (air) go out through outlets that are opposing to the inlets 20 and 21, respectively.

In the SOFC having the above structure, to improve the power output performance with a fixed capacity, it is understood that there are two important subjects: how to increase the surface area of the power generation layer, and how to facilitate diffusion of gases. Considering the above, interrelationships between the pitch of dimple arrangement and the diameter and height of dimples are most important. The dimple half pitch (horizontal distance between a top and a bottom) is preferable to be as small as possible. The diameter and the height of dimples are closely related in improving the power output performance, which does not contribute to improve the performance is not necessary improved by simply increasing the surface area per unit capacity. For example, when examining the effect of the height (H) with a certain fixed diameter (D) of the dimple, the inventors have found that there is a range in which an increase in height causes a deterioration in performance. Further, it has been found that the solid oxide electrolyte 13 should be made thinner but excessive thinning causes only a little effect.

Fig. 2 (Enlarged cross-section of time along A-A in Fig. 1) shows definitions of the dimple height (H), dimple half pitch ((1/2)P) and dimple diameter (D).

After various investigations in view of the above-described problems and based on the above knowledge, the inventors have found the following. It is desired that a maximum number of dimples 15A and 15B be provided on both sides of the power generation layer 11A (11B) as long as they do not affect the gas flows. Under this condition, a maximum apparent power generation efficiency can be obtained with a fixed capacity by employing a dimple shape that is determined by H = 3.2D - (1/2)P ± D. The values in the above equation are those for improving the apparent power generation efficiency, and do not depend on the electrode material. That is, the above values serve to determine the shape to improve the basic performance of the fuel cell.

Based on the above investigation results, in the SOFC according to the invention, the power generation layer including three layers of the fuel electrode, solid oxide electrolyte and oxygen electrode is formed with a plurality of dimples on both sides, wherein the dimples are shaped and arranged so as to satisfy H = 3.2D - (1/2)P ± D and D/ 0.5P≥0.68.

With this configuration, the SOFC of the invention can provide a high power output in accordance with applications such as large-capacity power generation for land use, middle- or small-capacity power generation for cogeneration, and a power supply for use in a closed space which is required to be compact.

BRIEF DESCRIPTION OF THE DRAWINGS

Fig. 1 is an exploded perspective view showing a SOFC according to an embodiment of the present invention;

Fig. 2 is an enlarged sectional view taken along line A-A in Fig. 1;

Fig. 3 is a sectional view in an assembled state of the SOFC in Fig. 1;

Fig. 4 is a graph showing a relationship between the SOFC performance and the thickness of YSZ that constitutes a solid oxide electrolyte;

Fig. 5 is a graph showing how the diameter and height of dimples influence the SOFC performance when the YSZ thickness is set at 100 μm (see Fig. 4) and the dimple pitch is fixed; and

Fig. 6 is a graph showing how the diameter and height of dimples influence the SOFC performance when the YSZ thickness is set at 200 μm (see Fig. 4) and the dimple pitch is fixed.

DESCRIPTION OF THE PREFERRED EMBODIMENTS

A preferred embodiment of the present invention will be described below in detail with reference to Figs. 1 to 3.

In general, a fuel electrode 12, a solid oxide electrolyte 13 and an oxygen electrode 14, which constitute a power generation layer 11, are made of the following materials. Fuel electrode 12: Ni/YSZ, $NiCeO_2$/YSZ, and like materials; solid oxide electrolyte 13: YSZ; and oxygen electrode 14: $LaSrMnO_3$, $LaCoO_3$ and like materials. Interconnectors 16A to 16C are made of LaMgCrO$_3$ or Ni-based refractory alloys, for instance.

In this embodiment, to facilitate evaluation of shape-induced differences in performance, the following materials were used. Fuel electrode 12: Ni/YSZ (60:40); solid oxide electrolyte 13: YSZ; oxygen electrode 14: LaSrMnO$_3$; interconnectors 16A to 16C: LaSrCrO,.

Other fixed parameters that were used in experiments are as follows. The particle diameters of materials used for the fuel electrode 12 and the oxygen electrode 14 were 1.95 μm and 2.45 μm, respectively. The gas diffusion coefficient, i.e., (interstice ratio)/(bending degree) ε/τ in each of the electrodes was 0.02. The degree of sintering, i.e., (sintering length)/(particle diameter), between each electrode and the solid oxide electrolyte 13 (YSZ) was 0.04. The power generation atmosphere temperature of a cell accommodating the power generation layer 11 was 1,000°C. Further, humidified hydrogen and air were supplied to the fuel electrode 12 and the oxygen electrode 14, respectively.

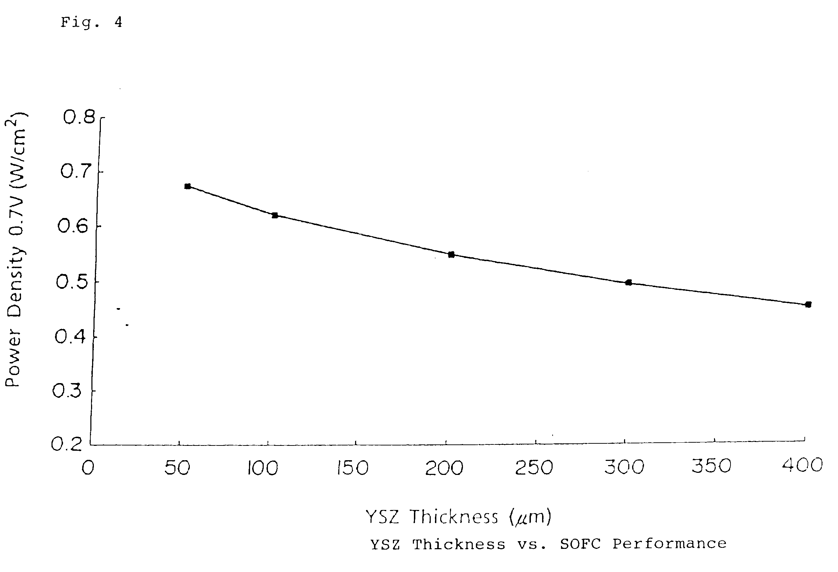

Under the above conditions, first, an attempt was made to determine a proper thickness of the solid oxide electrolyte 13 (YSZ). Results are shown in Fig. 4.

The other conditions in this experiment were as follows. Thickness of the fuel electrode 12: 50 μm; thickness of the oxygen electrode 14: 75 μm; diameter D of dimples: 1.25 mm; height H of dimples: 1.06 mm; and half pitch (1/2) P of dimples: 1.38 mm.

As is apparent from Fig. 4, the YSZ thickness greatly influences the power output performance (power density). That is, it has been found that in the thickness range of the experiment, the power generation performance is improved as YSZ is made thinner. However, to determine an optimum shape of dimples themselves, the YSZ thickness was fixed at 100 μm and 200 μm in the following experiments in addition to the fact that the thicknesses of the fuel electrode 12 and the oxygen electrode 14 were made fixed parameters. Further, to facilitate the experiments for determining the optimum shape, the dimple half pitch ((1/2)P) was fixed at 1.85 mm instead of the above-mentioned value of 1.38 mm.

The parameters for determining the shape were set as follows.

(1) Dimple diameter D (mm) (and its ratio to the half pitch ((1/2)P): 0.8 (0.43), 1.0 (0.54), 1.25 (0.68), 1.5 (0.81), 1.8 (0.97)
(2) Dimple height (H): 0.5 to 4.0 mm with intervals of 0.25 mm

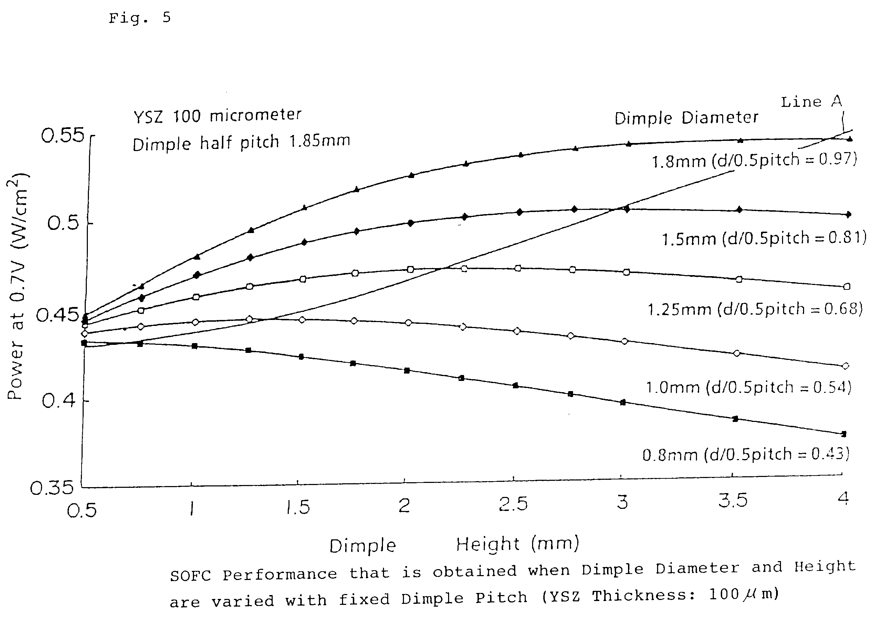

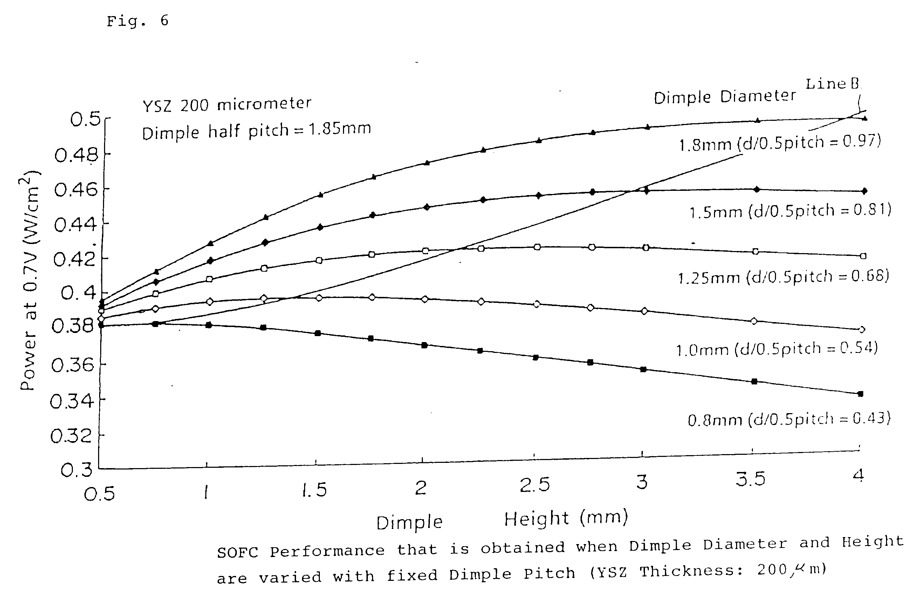

Figs. 5 and 6 show results of experiments in which the above parameters were varied with the YSZ thickness fixed at 100 μm (Fig. 5) and 200 μm (Fig. 6).

The two graphs show the same tendency in performance. That is, while the YSZ thickness changes absolute values of the performance, it causes almost no changes in the influences of such factors as the dimple diameter (D) and the dimple height (H). Although the dimple diameter (D) cannot physically exceed the half pitch ((1/2)P), it is desired that the former be closest to the latter.

With the half pitch ((1/2)P) fixed at 1.85 mm, a maximum power output with a dimple diameter D of 1.8 mm is obtained when the dimple height H is 3.5 mm. And a maximum power output with a dimple diameter D of 1.25 mm is obtained when the dimple height H is 2 mm. When the dimple diameter D is 0.8 mm, the power output steadily decreases as the dimple height H increases from 0.5 mm to 4 mm. These results suggest that there is a correlation between the diameter (D) and the height (H) of dimples.

Based on the above results, Equation (1) has been obtained as an equation for approximately providing maximum performance.

$$(\text{dimple height (H)}) = 3.2 \times (\text{dimple diameter (D)}) - (\text{dimple half pitch (1/2)P}) \qquad (1)$$

Line A in Fig. 5 and line B in Fig. 6 are lines for providing maximum performance which are obtained from Equation (1). Lines A and B well fit measured positions of maximum performance on Figs. 5 and 6. Based on the characteristic curves of Figs. 5 and 6, a desired dimple shape has been obtained as Equation (2) that includes a desirable variation range for actual use which range corresponds to the dimple diameter D.

$$H = 3.2 \times D - (1/2)P \pm D \qquad (2)$$

As is apparent from the above description, there is an upper limit in the dimple height (H) to increase the reaction surface area per single cell that accommodates a single power generation layer 11. Usually, increasing the cell height causes no problem in large-capacity power generation on the land. However, when the SOFC is used in a closed space such as a spacecraft or a submarine, it may be the case that a priority is given to the spatial limitation rather than the cost; that is, compactness is more required.

Therefore, to obtain a required power generation output, it should be determined for each case of manufacture whether to increase a power output per cell (the initial cost is low by virtue of a small number of cells but the total height is large), or reduce the total height of stacked cells (the initial cost is high due to an increased number of cells). In addition, the gas flows and the pressure loss are influenced by whether the ratio between the diameter and the half pitch should be increased and the pitch reduced to obtain a large power output or, conversely, the ratio between the diameter and the half pitch should be reduced and the pitch increased.

In connection with this, it is a matter in designing to judge, depending on a required power output, whether the addition of an auxiliary power supply causes no problem in economical performance. An optimum shape can be selected according to the invention.

## Claims

1. A solid oxide electrolyte fuel cell comprising a dimple-structure power generation layer (11) which includes three layers of a fuel electrode (12), a solid oxide electrolyte (13) and an oxygen electrode (14), wherein both faces of the dimple-structure power generation layer (11) are formed with a plurality of dimples (15A,15B),
characterized in that the dimples (15A,15B) are shaped and arranged so as to satisfy the conditions:

$$H = 3.2 \times D - 0.5 \times P \pm D,$$

and

$$D / 0.5 \times P \geq 0.68,$$

wherein:

H is the dimple height,
D is the dimple diameter,
P is the dimple pitch.

## Patentansprüche

1. Festoxidelektrolyt-Brennstoffzelle mit einer Grübchenstruktur-Energieerzeugungsschicht (11), die drei Schichten aus einer Brennstoffelektrode (12), einem Festoxidelektrolyten (13) und einer Sauerstoffelektrode (14) aufweist, wobei beide Flächen der Grübchenstruktur-Energieerzeugungsschicht (11) mit einer Vielzahl von Grübchen (dimples) (15A, 15B) geformt sind,
dadurch gekennzeichnet, daß die Grübchen (15A, 15B) so geformt und angeordnet sind, daß sie den folgenden Bedingungen genügen:

$$H = 3,2 \times D - 0,5 \times P \pm D$$

und

$$D / 0,5 \times P \geq 0,68,$$

worin bedeuten:

H = Grübchenhöhe,
D = Grübchendurchmesser,
P = Grübchenmittenabstand.

**Revendications**

1.  Pile à combustible à électrolyte à oxyde solide comprenant une couche de génération d'énergie (11) à structure bosselée qui comprend trois couches d'une électrode à combustible (12), un électrolyte à oxyde solide (13) et une électrode à oxygène (14), dans laquelle les deux faces de la couche de génération d'énergie (11) à structure bosselée sont formées d'une pluralité de bossages (15A, 15B), caractérisée en ce que les bossages (15A, 15B) sont formés et agencés afin de satisfaire les conditions :

$$H = 3,2 \times D - 0,5 \times P \pm D,$$

et

$$D / 0,5 \times P \geq 0,68,$$

dans lesquelles :

H est la hauteur de bossage,
D est le diamètre de bossage,
P est l'écartement de bossage.

Fig. 1

Fig. 2

Fig. 3

Fig. 4

YSZ Thickness vs. SOFC Performance

EP 0 654 839 B1

Fig. 5

YSZ 100 micrometer
Dimple half pitch 1.85mm

Dimple Diameter    Line A

1.8mm (d/0.5pitch = 0.97)

1.5mm (d/0.5pitch = 0.81)

1.25mm (d/0.5pitch = 0.68)

1.0mm (d/0.5pitch = 0.54)

0.8mm (d/0.5pitch = 0.43)

Power at 0.7V (W/cm²)

Dimple   Height (mm)

SOFC Performance that is obtained when Dimple Diameter and Height are varied with fixed Dimple Pitch (YSZ Thickness: 100 $\mu$ m)

11

Fig. 6

SOFC Performance that is obtained when Dimple Diameter and Height are varied with fixed Dimple Pitch (YSZ Thickness: 200 μm)

EP 0 654 839 B1